# EUROPEAN PATENT APPLICATION

(11) **EP 4 258 227 A1**
(43) Date of publication of application: **11.10.2023**
(21) Application number: 22382318.8
(22) Date of filing: 04.04.2022
(51) Int. Cl.: G06V 20/69, G06V 10/82, G06V 10/80

(54) **DETECTION OF TARGET SUBSTANCES IN BIOLOGICAL SAMPLES**

(71) Applicant: Enma Medical Analytics, S.L., 03440 Ibi Alicante (ES)
(72) Inventor: GIMENO VALERO, José, 03440 Ibi (Alicante) (ES)
(74) Representative: Hoffmann Eitle

(57) **Abstract**

A computer-implemented method to determine the presence of a target biological substance in a biological sample obtained from a subject. The method comprises receiving a microscopic projected image, taken from a lens microscope (110), of a test solution comprising the biological sample mixed with an agglutinating solution comprising beads coated in a substance configured to bond with the target biological substance. The beads agglutinate in the presence of the target biological substance. The method further comprises inputting the microscopic image to an image analysis algorithm configured to detect whether agglutination is present in the microscopic image, and outputting, by the image analysis algorithm an indication of whether the target biological substance is present or not present.

## Description

### TECHNICAL FIELD

The present disclosure relates to the detection of target substances in biological samples, and in particular a method to determine the presence of a target pathogen, antigen, antibody or biomarker in a biological sample. The disclosure also relates to an agglutinating solution for determining the presence of a target pathogen, antigen, antibody or biomarker in a biological sample.

### BACKGROUND

Coronaviruses are enveloped positive-stranded RNA viruses that are important human and animal pathogens. In the last months of 2019, a new coronavirus was identified in Wuhan, China, as the cause of a high number of pneumonia, many of which were fatal cases. The virus spread rapidly, causing an epidemic across China, which was followed by a global pandemic. In early 2020, the World Health Organization (WHO) designated the disease as COVID-19, referring to the virus causing the infection as SARS-CoV-2 (Severe Acute Respiratory Syndrome Coronavirus 2). Two years later, over 425 million people worldwide have been infected by SARS-CoV-2, of whom some 6 million have died.

Early detection of COVID-19 and isolation of patients is essential for disease control. Real-time quantitative PCR (qPCR) using nasopharyngeal swab samples or bronchoalveolar lavage fluids is at present the most reliable detection methodology, due to its high sensitivity and specificity and is recommended by WHO. However, this assay is laborious and needs to be carried out by highly qualified technical personnel, which limits the availability of tests. Its main shortcoming is that results are not immediate, which prolongs decision-making in case of possible outbreaks. Due to the unique characteristics of this disease, rapid large-scale monitoring is essential, as many of the patients are asymptomatic and the virus spreads very quickly. Since a large population needs to be tested, a rapid, simple and inexpensive test is needed, ideally with high sensitivity and accuracy, which can be performed on a large scale and by the patient themselves. The aim is early diagnosis, for better management (isolation and treatment if necessary) and follow-up of patients, implementation of prevention and spread control measures and epidemiological surveillance (DOI:10.1016/j.jviromet.2021.114437; DOI: 10.1016/j.bios.2020.112752).

Lateral flow immunoassay-based antigen tests have emerged to overcome the drawbacks of qPCR tests, offering a low-cost, easy-to-use and rapid procedure that can be done at home and yields results in 10-30 minutes (DOI: 10.1016/j.aprim.2021.102127). Studies have shown that these tests are very useful for the detection of SARS-CoV-2 in symptomatic patients, 5 days or less after symptom onset. However, in contrast to the qPCR methodology, they are very insensitive when the patient is asymptomatic which facilitates disease transmission, as these patients also have the capacity to infect healthy individuals. There is therefore a growing interest in finding more sensitive procedures capable of detecting the disease in patients with very low viral loads.

Also, a number of antibody tests have been approved for emergency use in the United States and Europe. These tests detect the immunoglobulin G (IgG), IgM, or IgA antibody against the spike protein (including the receptor-binding domain [RBD]) or nucleocapsid (N) protein of the severe acute respiratory syndrome coronavirus 2 (SARS-CoV-2) virus by enzyme-linked immunosorbent assay (ELISA). ELISA-based antibody tests, which can be qualitative or quantitative, require specialized instruments and are usually performed in a laboratory by a trained technician. To enable point-of-care testing, several rapid diagnostic tests (RDTs) based on lateral flow have been developed. Although the RDTs have reduced the time of the antibody test to 10-30 min from 2-5 h (for ELISA), they generally suffer from decreased sensitivity and specificity compared with ELISA-based assays.

Antibodies against SARS-CoV-2 can be generally divided into two main categories, neutralizing antibodies and non-neutralizing antibodies. The first category are antibodies that can be raised only against S protein. This is because SARS-CoV-2 virus invades its host via interaction of its S protein with ACE-2 protein on the surface of host cells. All of the vaccines in the market or under development contain SARS-CoV-2 S protein or S protein-encoding gene. The capability of inducing long-lasting and high concentration of neutralizing antibodies is one of the most important criteria in predicting the success of a SARS-CoV-2 vaccine.

There is therefore also a growing interest in finding more sensitive procedures capable of detecting the presence of antibodies in patients with very low viral loads in a rapid way without requiring a trained technician. This could help to determine in close to real time basis the immunization levels in cohorts of population, for the epidemic control. Similar interest applies to any other contagious disease, as epidemic control is one of the most effective way of challenging the evolution of the contagious disease. Moreover, a similar need exists to provide improved detection methods for other types of target antigens, antibodies, biomarkers and pathogens.

Agglutination assays are used for the detection of viral antigens in clinical samples. Agglutination assays usually rely on visual verification of the agglutination by a clinician. The visual verification is subjective and prone to error by the clinician. A quantitative particle agglutination assay has been proposed which uses mobile holographic imaging and deep learning (https://doi.org/10.1039/D1LC00467K). However, holographic imaging devices are generally computationally complex as they record light wave front information originating from the object, from which a computer calculates the image by a numerical reconstruction algorithm. There is therefore a need for improved agglutination assays, and in particular for a less computationally-complex method of performing an agglutination assay.

### SUMMARY OF THE INVENTION

The invention relates to a computer-implemented method to determine the presence of a target biological substance in a biological sample obtained from a subject. The method comprises the steps of:
a) receiving a microscopic projected image, taken from a lens microscope, of a test solution comprising the biological sample mixed with an agglutinating solution comprising beads coated in a substance configured to bond with the target biological substance, wherein the beads agglutinate in the presence of the target biological substance;
b) inputting the microscopic image to an image analysis algorithm configured to detect whether agglutination is present in the microscopic image,
c) outputting, by the image analysis algorithm, an indication of whether the target biological substance is present or not present.

In a preferred embodiment the target biological substance is a viral antigen, or a viral antibody. More preferably, the viral antigen is a SARS-CoV-2 antigen selected from: nucleocapsid (N), Spike (S), Membrane (M) and/or Envelope (E) proteins; or wherein the viral antibody is an antibody for SARS-CoV-2 antigen selected from: nucleocapsid (N), Spike (S), Membrane (M) and/or Envelope (E) proteins.

In an alternative preferred embodiment, the target biomarker is a cancer biomarker indicative of the presence of cancer in the subject. In another alternative preferred embodiment, the target pathogen pertains to the *Leishmania* genus.

Preferably, the sample is saliva, throat mucus or sputum.

In a preferred embodiment, the image analysis algorithm is a machine learning algorithm trained to determine whether the microscopic image contains agglutinations.

In another preferred embodiment, wherein the method comprises receiving a plurality of microscopic images of the test solution, the method comprises selecting a subset of microscopic images of the plurality of images which each have an image sharpness above a predetermined value. Moreover, step c) comprises inputting the subset of microscopic images to the image analysis algorithm. More preferably, the subset of microscopic images is selected by computing a numerical value indicative of image sharpness for each of the microscopic images and comparing each numerical value to the predetermined value. Even more preferably, the image analysis algorithm determines whether agglutinations are present in each image of the subset of images, and provides an indication that the target biological sample is present or not present based on a fusion of the analysis of one or more of the images of the subset of microscopic images. Preferably the fusion criteria is selected from the group comprising: maximum score criteria, average score criteria, majority voting criteria or single positive criteria.

In a preferred embodiment, the resolution of the microscopic image is equal or lower than 1 µm.

In another preferred embodiment, the indication is a quantitative value indicating the confidence of the pathogen, cell, target protein or antibody being present.

In another preferred embodiment, the agglutination solution comprises: beads coated in antibodies specifically binding a target pathogen, antigen or biomarker, or coated in antigen receptor-binding domains (RBDs) specifically binding a target antibody on its surface; and a buffer. The solution is a colloidal solution of the beads suspended in the buffer, and indicates the presence of the pathogen, antigen, antibody or biomarker in the biological sample by the formation of antigen-antibody complexes that agglutinates the beads between themselves. More preferably, the beads are polystyrene latex beads and are preferably comprised between 0.8 and 1.2 µm and/or the buffer is a preservation buffer wherein the zeta potential of the beads in the buffer is higher than 20 mV. In a further preferred embodiment, the beads comprise at least two different sets of beads comprising different antibodies specifically binding the same target pathogen, antigen or biomarker.

The invention also relates to an *in-vitro* method for the diagnosis of a disease selected from an infectious disease or cancer, which comprises determining the presence of a target pathogen, antigen, antibody or biomarker in a biological sample obtained from a subject, by means of any of the methods described herein and to a computer program product.

### BRIEF DESCRIPTION OF THE DRAWINGS

To enable better understanding of the present disclosure, and to show how the same may be carried into effect, reference will now be made, by way of example only, to the accompanying schematic drawings, in which:
Fig. 1 shows a method for determining the presence of a target biological substance according to one or more embodiments;
Fig. 2 shows an apparatus according to one or more embodiments; and
Figs. 3 to 9C show various experimental data obtained in Examples 1 and 2.

### DETAILED DESCRIPTION

As used herein, the term "projected image" may be understood to mean a direct microscopic image, as opposed to a reconstructed image obtained by a light wave front information obtained by a holographic microscope.

The present disclosure relates to a computer-implemented method to determine the presence of a target biological substance, and in particular a target pathogen, antigen, antibody or biomarker in a biological sample obtained from a subject. The computer-implemented method of the present provides an automated output indicating whether the target substance is present in the sample, based on a microscopic image of a biological sample taken by a lens microscope of the biological sample mixed with an agglutinating solution. The method therefore provides a method of detecting the biological substance in an objective manner using an agglutination test which does not rely on a clinician's manual verification of the agglutination, which is prone to error. The method uses a microscopic image which is obtainable from a commonplace lens microscope and does not therefore require complicated or expensive hardware.

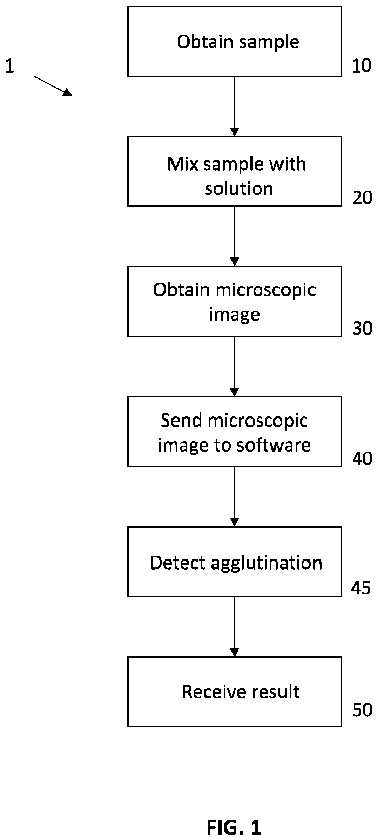

Fig. 1 shows a method 1 of determining the presence of a target biological substance in a biological sample.

In a first step 10, the method 1 comprises obtaining the biological sample from a subject. The biological sample may be, for example, a saliva, throat mucus or sputum sample. The biological sample may be any other suitable biological sample which may contain the target biological substance, such as blood or urine.

In a second step 20, the biological sample is mixed with an agglutinating solution according to the present disclosure to obtain a test solution, wherein the agglutinating solution agglutinates in the presence of the target biological substance. For example, the agglutinating solution contains beads coated in antibodies specifically binding the target pathogen, antigen or the biomarker, or antigen receptor-binding domains (RBDs) specifically binding the target antibody, such that agglutination or clumping occurs in the presence of the target biological substance. Additionally, the biological sample may be mixed with a reaction buffer before being mixed with the agglutinating solution. The reaction buffer may comprise an ionic solution such as saline solution which accelerates the agglutination process.

In a third step 30, a microscopic projected image of the test solution is obtained from a lens microscope. A predetermined amount of time (for example 1, 2, 3, 4, 5 minutes or longer) between steps 20 and 30 may elapse in order to allow the biological sample to mix with the agglutinating solution and for the agglutination to occur. The test solution may be added to a microscope slide and provided to a microscope which is configured to take a microscopic image of the test solution. The microscope may be any suitable microscope which is configured to take a microscopic projected image of the test sample. It will be appreciated that the resolution of the microscope must be sufficiently low to detect agglutinations in the test solution. In a preferred embodiment, the resolution of the microscope is at least as small as the size of the beads of the agglutinating solution. For example, if the beads of the agglutinating solution have a diameter of about 1µm, then the resolution should be about 1µm or less in order to be able to resolve even the smallest agglutinations. It is noted that this is not essential, as a microscope with a worse resolution would still be able to image large agglutinations, and accordingly still be able to detect the presence of the target biological substance when a larger amount is present. Accordingly, a worse resolution may be used when a lower sensitivity is required. In some examples, the microscope used may be that disclosed in European patent application number EP21382735.5.

In a step 40, at least one microscopic projected image of the test solution is sent to a computer program product according to the present disclosure, the computer program product comprising an image analysis algorithm. In step 45 The image analysis algorithm detects whether the agglutination has occurred in the microscopic image. In other words, the image analysis algorithm is configured to detect whether the microscopic image contains agglutinations, or whether it is substantially free from agglutinations.

In a step 50, based on the determination of the image analysis algorithm, the computer program product outputs an indication of whether the target biological substance is present or is not present. Based on the output, a diagnosis of a disease such as an infectious disease or cancer may be made, based on the detected presence of a target biological substance related to the disease.

Steps 10 and 20 may be omitted, i.e. step 30 may be the first step of the method 1 and may receive image data of a test solution obtained prior to the method.

Advantageously, the agglutination occurs over a short time period (for example less than 30 minutes), so that a diagnosis can be provided almost immediately after the biological sample is taken.

The agglutinating solution of the present invention may be any solution comprising beads coated in a substance configured to bond with the target biological substance such that the beads agglutinate (clump) within the solution in the presence of the target biological substance. For example, the agglutinating solution contains beads coated in antibodies specifically binding the target pathogen, antigen or the biomarker, or antigen receptor-binding domains (RBDs) specifically binding the target antibody. This means that in the presence of the target biological substance, the beads have an affinity for one another via the target biological substance such that the beads form clumps within the solution.

In preferred embodiments, the beads are polystyrene latex beads coated in the substance configured to bond with the target biological substance. Preferably the latex beads are suspended in a preservation buffer which does not react with the coated beads. The preservation buffer may be any dispersing medium which maintains the latex beads in a colloidal dispersion. Preferably, the zeta potential of the beads in the buffer is higher than 20 mV. Preferably, the beads have an average diameter between 0.8µm and 1.2µm, more preferably between 0.9µm and 1.1µm even mor preferably 1µm.

In preferred embodiments where the coating substance is an antibody, the agglutinating solution comprises two subsets of beads. A first subset of beads are coated in a first antibody configured to bond with the target biological substance (e.g. a target pathogen, antigen or biomarker), and a second antibody, different from the first antibody, also configured to bond with the target biological substance. This provides an increase amount of agglutination for a given about of the target biological substance, increasing the sensitivity of the methods disclosed herein.

In some embodiments, at least one set of beads comprises a chloromethyl group on the surface which enables proteins to be attached covalently. Such particles do not require preactivation for adsorption of proteins (as opposed to, for example, carbozylated particles), which makes the coupling chemistry easier. For example, in some embodiments, the set of beads comprises a chloromethyl group on the surface covalently bonded with IgG antibodies for a predetermined infectious disease. In some embodiments, at least one set of beads comprises receptor-binding domain (RBD)-coated latex beads to detect neutralizing antibodies.

In some embodiments where the biological sample is mixed with a reaction buffer, the reaction buffer comprises a solution having an ionic strength of NaCl of at least 20mM/µL, and more preferably at least 30mM/µL.

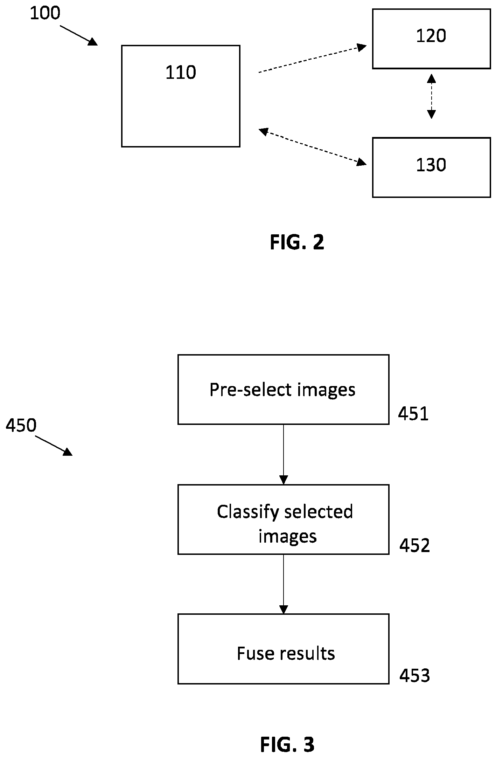

Fig. 2 shows an apparatus 100 for carrying out the method 1 described with reference to Fig. 1, according to one or more embodiments. The apparatus 100 comprises a lens microscope 110. The apparatus further comprises a computing device 120 and, optionally, a user device 130, both of which are communicatively connectable to the microscope 110 by any suitable wired or wireless connection, such as via Bluetooth or the internet. In some embodiments, the computing device 120 and user device 130 may be a single device.

The microscope 110 may be any suitable microscope 110 configured to record a microscopic projected image of the test solution obtained according to step 20, and may be any suitable lens microscope having a resolution sufficiently small to resolve agglutinations in the test solution. The microscope 110 may comprise electronics for communicatively connecting to the computing device 120 and the user device 130. The microscope 110 may further comprise a processor, microprocessor or similar configured to receive control instructions from the user device 130 and/or the computing device 130. The microscope 110 may be configured to send multiple microscopic projected images over a time period.

The computing device 120 may be any suitable computing device such as a computer, laptop, server, distributed computing system (cloud) or similar, and comprises a computer program product, the computer program product comprising instructions which, when executed by the computing device 120, performs an image analysis algorithm on image data to detect the presence of agglutinations in the image data. The image analysis algorithm may be any suitable image analysis algorithm configured to detect agglutinations in the image data. For example, the image analysis algorithm may be an object detection algorithm configured to detect objects greater than a predetermined size in the image, which is indicative of an agglutination. In some embodiments, the image analysis algorithm may be a trained machine-learning algorithm such as a Deep Neural Network (DNN) which has been trained with image data obtained from a lens microscope of various test solutions. The training data comprises image data of test solutions containing agglutinations, and others containing no agglutinations, and an associated agglutination status of each image. Optionally, the training data may further include a numerical value for the amount or concentration of the target biological substance in the test solution of each image. The image analysis algorithm is configured to detect whether agglutination is present in the microscopic image, and may further output a confidence value or an estimated amount of the target biological substance in the test solution. The computing device 120 is configured to receive image data from the microscope 110. The image data may comprise a single image or multiple images obtained by the microscope 110 over a time period.

The computer program product may be implemented on any suitable software, hardware, or a combination thereof stored in the computing device 120, for example in a memory of the computing device 120.

The user device 130 may be any suitable computing device such as a smart phone, tablet or computer, and may be communicably connectable to the microscope 110 by any suitable wired or wireless connection, such as by Bluetooth or Wi-Fi. The user device 130 may comprise a use interface such as a GUI to control the microscope 110, such as to power on the microscope 110, to indicate to the microscope 110 that the test solution is correctly placed in the microscope 110, to instruct the microscope 110 to collect image data of the test solution and to send the image data to the computing device 120. The user device 130 may be connectable directly to the computing device 120 to receive one or more of an indication of whether the target biological substance is present or not present, the confidence of the result, and the diagnosis of a disease associated with the target biological substance.

Fig. 3A shows a method 450A that may be implemented by an image analysis algorithm in step 45 described in Fig. 1, in embodiments where multiple microscopic images are obtained. In step 451 a subset of images from the multiple microscopic images are selected that have an acceptable image quality, and the remaining images with a low image quality are discarded. For example, images that do not contain enough sample or are not sufficiently focused are discarded. In particular, the image analysis algorithm comprises a process for analysing the sharpness of features in the image. Suitable algorithms for this process include: determination of the variance of the Laplacian of the image; variance of the result of applying a Top Hat morphological operator for particle enhancement; and magnitude of the reconstructed image after low frequency filtering in the Fourier domain. Each of these algorithms provides a numerical indication of the sharpness of the image, and accordingly the numerical result can be compared to a predetermined threshold saved in a memory. Images having a numerical result below the predetermined threshold which indicates a low image quality (unfocused) are discarded.

In step 452, the selected images (i.e. the images that are not discarded) are each classified by the image analysis algorithm according to whether the image contains an agglutination or not. In embodiments where the image analysis algorithm provides a confidence value for the classification, some images may be classified as "not valid" where the image analysis algorithm does not have an acceptable confidence level for the presence or not of agglutination.

In step 454, the individual classifications of the multiple images are fused to provide an overall determination of whether agglutination is present or not in the test solution. If no images of the multiple images have a valid result (i.e. all of the images are classified as "not valid"), then the algorithm outputs and "invalid" result. Similarly, an "invalid" result is output if all of the received images were discarded in step 451. The algorithm may also output a confidence value which is an average of the confidence values for each analysed image.

When there is at least one image of the plurality of selected images which has a valid classification (i.e. agglutination present or agglutination not present), different criteria may be used.

A first criteria may be applied, named "maximum score", in which the test solution is determined to have the classification corresponding to the image with the highest confidence value. For example, if out of a plurality of images the image analysis algorithm determined that a particular image has agglutinations with a confidence level of 95%, and no other of the plurality of images has a classification with a higher confidence level, then the image analysis algorithm indicates that agglutination is present and therefore the target biological substance is present.

A second alternative criteria may be applied, named "average score", in which the confidence levels of the images for each classification is calculated, and the classification with the higher average confidence level is assigned to the test solution. For example, if the images classified as having agglutinations present have a higher average confidence than the images classified as not having agglutinations present, then the image analysis algorithm determines that the solution has agglutinations present. The image analysis algorithm then provides an indication of whether the target biological substance is present or not present based on the classification with the higher average confidence level.

A third alternative criteria may be applied, named "majority voting", in which the number of classifications are counted (i.e. the number of images classified as "agglutination present" and the number of images classified as "agglutination not present" are counted), and the test solution is determined to have the classification with a higher count. The image analysis algorithm then provides an indication of whether the target biological substance is present or not present based on the classification with the higher count.

A fourth alternative criteria may be applied, names "single positive", in which the test solution is determined to have agglutinations present if at least one image of the plurality of images is classified as having agglutinations present. The image analysis algorithm then provides an indication of whether the target biological substance is present or not present based on whether at least one image has agglutinations present. This criteria assumes that the multiple images may be from different parts of the test solution, for example when the images are obtained by the microscope whilst the sample slide containing the solution is being inserted into the sample slide holder of the microscope. Accordingly, as some parts of the sample may contain agglutinations and some others not, if one image is determined to have agglutinations it can be assumed that the sample has agglutinations.

All alternative criterion provide an acceptable specificity and sensitivity, and the "majority voting" criteria has been observed to provide the best results in tests.

It is noted that in some embodiments, some or all of the image analysis algorithm may be executed by a processor of the microscope 110. For example, the pre-selection step 451 may be performed by the microscope 110, reducing the amount of data that must be sent to the computing device 120 for processing.

In some embodiments, the method 450 omits the pre-selection step 451 and all images are classified by the image analysis algorithm. In particular, in embodiments where the image analysis algorithm determines a confidence level for each classification, low quality images are classified as invalid and disregarded in step 452.

The methods described herein may be applied to detecting the presence of a viral antigen or a viral antibody. The viral antigen may be a SARS-CoV-2 antigen selected from: nucleocapsid (N), Spike (S), Membrane (M) and/or Envelope (E) proteins. The target antibody may be an antibody for SARS-CoV-2 antigen selected from: nucleocapsid (N), Spike (S), Membrane (M) and/or Envelope (E) proteins. Alternatively, the target biological substance may be: a cancer biomarker indicative of the presence of cancerous cells in the biological sample; a target pathogen pertaining to the Leishmania genus.

The following aspects also form a part of the present disclosure.

There is provided a colloidal solution for determining the presence of a target biological substance in a biological sample, the solution comprising: a plurality of beads coated in a substance configured to bond with the target biological substance, wherein the beads agglutinate in the presence of the target biological substance. The beads are suspended in a buffer to form the colloidal solution.

The beads may be coated in in antibodies specifically binding a target pathogen, antigen or biomarker, or coated in antigen receptor-binding domains (RBDs) specifically binding a target antibody on its surface. The solution may indicate the presence of the pathogen, antigen, antibody or biomarker in the biological sample by the formation of antigen-antibody complexes that agglutinates the beads between themselves. The beads may be polystyrene latex beads and are preferably comprised between 0.8 and 1.2 µm. The buffer may be a preservation buffer wherein the zeta potential of the beads in the buffer is higher than 20 mV. The micrometric beads may comprise at least two different sets of micrometric beads comprising different antibodies specifically binding the same target pathogen, antigen or biomarker.

The target antigen may be a viral antigen and may be a SARS-CoV-2 antigen selected from: nucleocapsid (N), Spike (S), Membrane (M) and/or Envelope (E) proteins. The target antibody may be a viral antibody and may be an antibody for SARS-CoV-2 antigen selected from: nucleocapsid (N), Spike (S), Membrane (M) and/or Envelope (E) proteins.

The target biomarker may be a cancer biomarker indicative of the presence of cancer in the subj ect.

The target pathogen may pertain to the *Leishmania* genus.

### EXAMPLES

### Example 1: Detection of SARS-CoV2 antigen by immunoagglutination of microparticles covered by specific antibodies

### Materials and methods

Functionalized micro-beads were used as carriers of antibodies, and specifically of immunoglobulin G (IgG) antibodies. The micro-beads were latex micro-beads with functionalised chloromethyl groups on the surface which enable them to attach proteins covalently. The used chloromethyl functionalized beads do not require preactivation for adsorption of proteins (in opposite to carboxylated beads) which makes the coupling chemistry between the IgG antibody and bead easier.

Polystyrene latex beads, 1 µm in diameter, were used. This size is appropriate for particle visualization with a digital light microscope. Two specific IgG antibodies of SARS-CoV-2, used for the preparation of the different reagents, were purchased from Certest (Zaragoza, ES). IgG molecules were covalently coupled to beads at 35°C by adding a colloidal latex bead suspension to two separate protein mixture solutions. The final reagent R was an equal volume mixture of two reagents: R1 and R2. R1 consisted of colloidal latex beads coated with a first antibody A, while R2 consisted of latex beads coated with a second antibody B. Each reagent was prepared individually. Briefly, the calculated amount of antibody, depending on the desired coating of the latex particles, was dissolved in 1.5 mL of sensitization buffer, with latex beads. This solution was kept for 6 hours under agitation at 35°C. The antibody-free sites of the latex beads were then blocked. To block the antibody-free sites, the latex beads were purified by centrifugation at 10.000 r.p.m. for 10 min, and the precipitate was, subsequently, resuspended in 1 ml of blocking buffer (1% bovine serum albumin). After 24 hours of incubation in the fridge, latex particles were washed. Once again, latex particles were centrifuged, and the precipitate was resuspended in 1 ml of washing buffer (0.1 M glycine solution). This step was repeated twice. The final precipitate was resuspended in 1 ml preservation buffer. To obtain R, which is a mixture of two antibodies bound to latex particles, equal volumes of R1 and R2 were mixed.

The amount of antibody adsorbed onto latex beads was determined from the absorbance at 562 nm of the supernatant solutions, using the PierceTM bicinchoninic acid Protein Assay Kit (BCA) under manufacturer's instructions. Firstly, a standard curve was made with diluted albumin (BSA) standards of 0, 5, 25, 50, 125 and 250 µg/ml. Subsequently, the amount of antibody not adsorbed onto latex particles was determined from reagent supernatants obtained during the first centrifugation step. Finally, the data provided by Certest about the initial antibody concentration allowed the calculation of the final amount of antibody adsorbed on the surface of the latex particles.

To perform the antigen detection assay, various amounts of the final reagent R ("x" µL) were diluted in preservation buffer ("y" µL) to a final volume of 10 µL (i.e. x+y=10). In several experiments, this volume was placed on a slide-type sample holder and incubated with 10 µL of reaction buffer either in the absence (negative control) or presence (positive control) of antigen. The antibody-coated beads of reagent R are highly stable in the preservation buffer, but this colloidal stability is lost in the presence of the antigen (SARS-CoV-2 NP), which is specifically recognized by them leading to agglutination. Furthermore, to accelerate this agglutination process, the preservation buffer was replaced by the reaction buffer comprising 340mM NaCl, in which the beads reduce their stability and the formation of antibody-antigen complexes is favoured.

The sample holder was inserted in a digital light microscope and images were captured by the microscope at different times. A microscope according as described in European patent application number EP21382735.5. The agglutination phenomenon can be visualized from the images captured by the optical microscope. These images are processed by imaging software that is able to detect agglutination at very low antigen concentrations.

The hydrodynamic size, polydispersion, Zeta Potential and electrophoretic mobility of the reagents were analyzed by Dynamic Light Scattering (DLS) technique. For this purpose, a Malvern Zetasizer Nano-ZS instrument (Worcestershire, UK) provided with a monochromatic coherent 4 mM Helium-Neon laser (λ = 633 nm) was employed. Size measurements were carried out in disposable cuvettes at an angle of 173° in triplicate and at room temperature, while Zeta potential measurements were carried out under the same conditions, but in specific folded capillary cells for Zeta Potential measurements.

Monitoring the antigen-antibody complex formation by latex agglutination tests requires optimization of multiple variables which can affect the reliability and sensitivity of the assays. Some of these variables are the nature and properties of the latex particles (dimensions, surface charge, presence of functional groups, surface hydrophobicity, etc.), the agglutination conditions (temperature, pH, ionic strength, etc.), or the detection method used for the assay (turbidimetry, reflectometry, optical microscopy, visual examination, etc.). Among these variables, the ones that most affect the assay are those related to the colloidal stability of the particles. The latex particles coated with the antibodies (reagents R1 and R2) must be stable in the absence of the antigen, both in the preservation and in the reaction buffer, so that the agglutination process should only be triggered when the antigen is added. If not, the assay would give rise to false positives. However, the coating of the latex particles with the antibodies already induces in many cases a certain destabilization at the physiological conditions under which the assay has to be carried out. Therefore, a prior study of this colloidal stability is necessary in order to select the composition of the buffer, the degree and type of coating and the final conditions of the assay that maximize the difference between negative and positive controls. Part of this information can be obtained from the Z-potential measurements of the antibody coated particles, given the correlation between this parameter and the colloidal stability of the samples. Table 1 shows Z-potential, together with the hydrodynamic diameter and polydispersity index of latex particles coated with both antibodies in water and the sensitization buffer.

**Table 1: Characterization of the latex particles coated with the different antibodies**

| **Antibody** | **Medium** | **Diameter (nm)** | **Polydispersity index** | **Zeta potential (mV)** |
|---|---|---|---|---|
| A | Water | 1116±3 | 0.125 | -30.8 |
| | Buffer | 990±6 | 0.201 | -53.7 |
| B | Water | 1134±3 | 0.070 | -30.8 |
| | Buffer | 1042±7 | 0.166 | -53.2 |

The results show that all batches of particles are stable (Z.P. values are higher than |20| mV), have similar sizes and low polydispersity. The higher stability in buffer is probably due to the fact that BSA, due to its isoelectric point (4.9), has more negative charges at pH 7.4 than in milli-Q water (pH 6), so it coats the particles more efficiently when they are in the buffer.

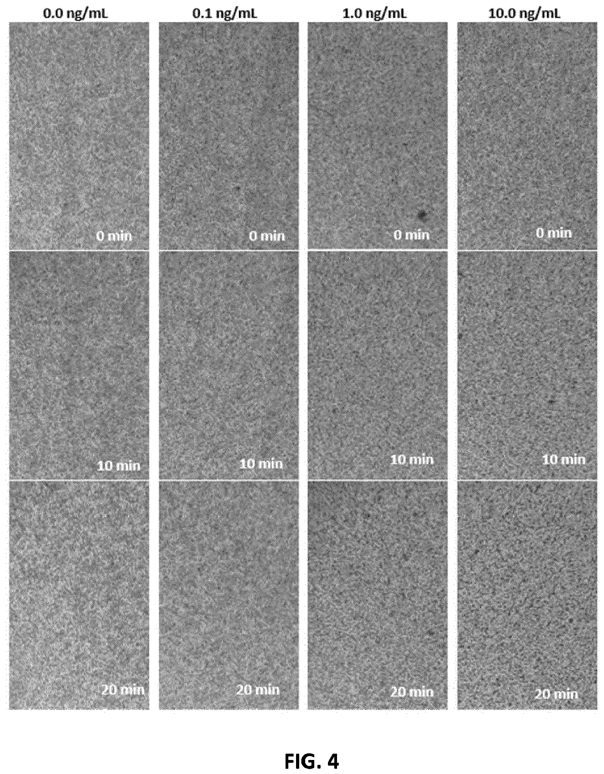

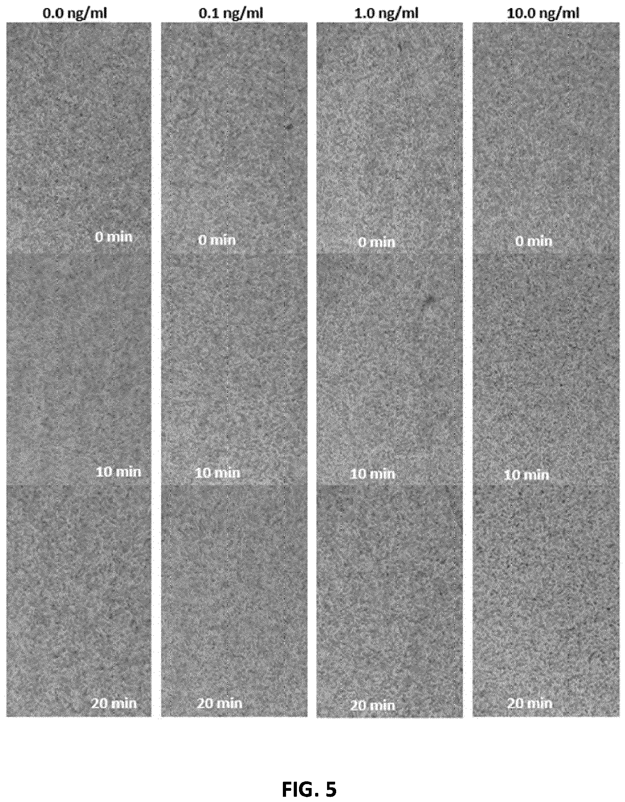

The amount of latex particles in the final assay was checked whether it was possible to reduce the aggregation of the negative control after a certain incubation time, without decreasing the sensitivity of the assay. Figure 4 shows microscopic images obtained for x=2 *µ*l + y= 8 *µ*l, for samples having O.Ong/mL, 0.1ng/mL, 1.0ng/mL and 10.0ng/mL of the target antigen at 0, 10 and 20 minutes from exposure to the reagent. Figure 5 shows microscopic images obtained for x=1.5 *µ*l + y= 8.5 *µ*l, for samples having O.Ong/mL, 0.1ng/mL, 1.0ng/mL and 10.0ng/mL of the target antigen at 0, 10 and 20 minutes from exposure to the reagent. In both Figs. 4 and 5, the reaction buffer had an ionic concentration of NaCl of 340nM (i.e. 34 mM/*µ*l). The result obtained for x=1.5 *µ*l was better than that found at x=2.0 *µ*l, since once the images were processed, the presence of the antigen was detected even in the first 10 minutes of incubation, before the negative control had started to aggregate.

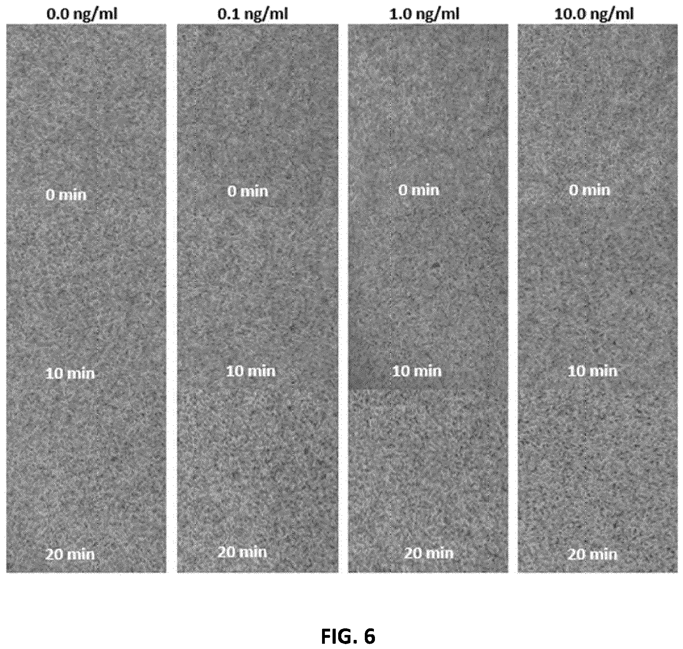

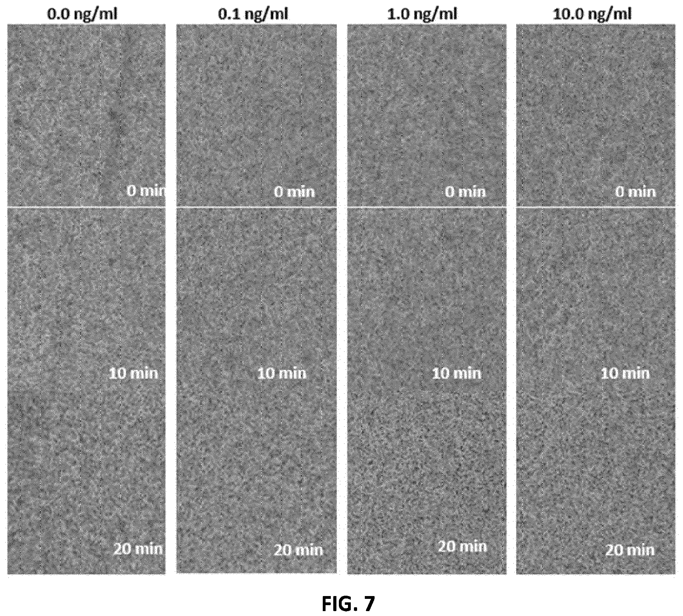

The ionic strength of reaction buffer was decreased reducing the concentration of NaCl from 340 mM (i.e. 34 mM/*µ*l) to 240 (i.e. 24 mM/*µ*l) and 200 mM (i.e. 20 mM/*µ*l) to see how it affected the sensitivity of the assay. The decrease in salt causes the electrical repulsion between the particles to be greater (the electrical double layer is longer), which prevents them from approaching each other and consequently hinders agglutination. Figure 6 shows microscopic images obtained for x=1.5 *µ*l + y= 8.5 *µ*l, for samples having O.Ong/mL, 0.1ng/mL, 1.0ng/mL and 10.0ng/mL of the target antigen at 0, 10 and 20 minutes from exposure to the reagent the reaction buffer having an ionic concentration of NaCl of 240nM (i.e. 24 mM/*µ*l). Figure 7 shows microscopic images obtained for x=1.5 *µ*l + y= 8.5 *µ*l, for samples having O.Ong/mL, 0.1ng/mL, 1.0ng/mL and 10.0ng/mL of the target antigen at 0, 10 and 20 minutes from exposure to the reagent the reaction buffer having an ionic concentration of NaCl of 200nM (i.e. 20 mM/*µ*l). Figures 5, 6 and 7 show that the negative controls were very similar for all concentrations, 340 mM (the original) 240 mM and 200 mM. However, as the salt concentration decreases the sensitivity of the method decreases.

### Results

The utility of the method to detect SARS-CoV-2 antigen with specific antibody-covered microbeads was compared with several commercial diagnostic tests based on lateral flow. In the article "Comparison of seven commercial SARS-CoV-2 rapid point-of-care antigen tests: a single-centre laboratory evaluation study" published in The Lancet (2021 https://doi.org/10.1016/S2666-5247(21)00056-2), authors report a comparative evaluation of seven SARS-CoV-2 rapid antigen tests available on the European market, comparing the limits of detection. Two of these tests have a limit of detection of 2.5 ng/ml of antigen. The rest of analysed tests have a limit of detection higher of 5 ng/ml.

The method of example 1 achieves a limit of detection as low as of 50 pg/ml (50 times lower than that of commercial tests).

### Example 2: Detection of SARS-CoV2 neutralizing antibodies by immunoagglutination of microparticles covered by RBD antigen

### Materials and methods

To show the utility of the present method to detect neutralizing antibodies, receptor-binding domain (RBD)-coated latex beads were prepared. For this purpose, polystyrene latex beads with 1 µm in diameter were used. RBD molecules were covalently coupled to latex beads at 35°C by adding the latex colloidal suspension to the RBD protein mixture solutions. Incubation was carried out in a thermostatic bath where the sample was gently agitated for 6 h. After incubation, the sensitized particles were centrifuged at 10.000 r.p.m. The supernatant was kept for determination of un-adsorbed protein concentration and pellet was resuspended with the storage buffer. The amount of protein adsorbed on latex was carried out using the copper reduction/bicinchoninic acid reaction (BCA method). The antigen-bead complex was washed twice with 0.1 M glycine solution and blocked for 48 h with 1% bovine serum albumin (BSA).

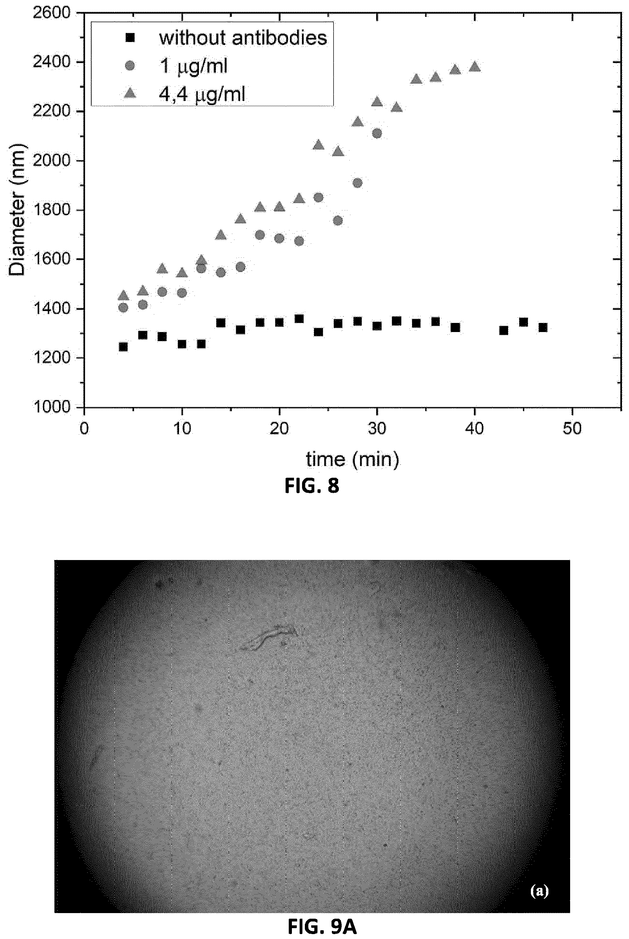

The immunoagglutination of RBD-coated latex beads as a function of time in the absence and presence of increasing concentration of neutralizing antibodies was examined by light scattering (PCS). The experiments were performed in the reaction buffer. Fig. 8 shows the measured diameter of the particles in the sample by PCS. As can be seen in Fig. 8 the reactive is stable in the reaction buffer. On the other hand, the response is dependent on the antibody concentration, increasing the aggregate diameter with increasing the antibody concentration of the sample.

For the immunoreactivity assays with the present method, small amounts of sensitized particles with RBD antigen and SARS-CoV-2 neutralizing antibody solution were mixed in buffer reaction. Figs. 9A to 9C show microscopic images of the assay obtained in the absence of neutralizing antibodies, in the presence of 10 µg/ml of neutralizing antibodies, and in the presence of 30 µg/ml of neutralizing antibodies, respectively, after 10 minutes of exposure to the agglutinating solution.

### Results

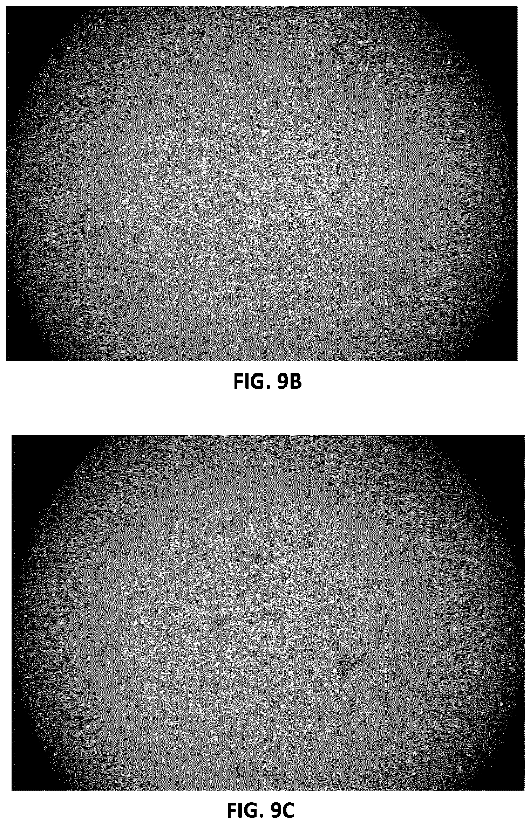

Upon mixture with the agglutinating solution and reaction buffer, the particles formed agglutinations within 10 min, which can be clearly identified with a digital light microscope (see Figs. 9B and 9C). The phenomenon of aggregation as a result of immunoreaction is based on the formation of bridges between RBD antigen molecules adsorbed onto particles and SARS-CoV2 neutralizing antibodies present on the sample. Although latex agglutination is commonly used as a qualitative assay, it is possible to determine the degree of agglutination using the methodology disclosed herein. As shown in Figure 3, the percentage of agglutination for RBD-coated latex particles increased when an incremental amount of anti-RBD antibodies (neutralizing antibodies).

All of the above are fully within the scope of the present disclosure, and are considered to form the basis for alternative embodiments in which one or more combinations of the above described features are applied, without limitation to the specific combination disclosed above.

In light of this, there will be many alternatives which implement the teaching of the present disclosure. It is expected that one skilled in the art will be able to modify and adapt the above disclosure to suit its own circumstances and requirements within the scope of the present disclosure, while retaining some or all technical effects of the same, either disclosed or derivable from the above, in light of his common general knowledge in this art. All such equivalents, modifications or adaptations fall within the scope of the present disclosure.

## Claims

1. A computer-implemented method to determine the presence of a target biological substance in a biological sample obtained from a subject, the method comprising:
a) receiving a microscopic projected image, taken from a lens microscope, of a test solution comprising the biological sample mixed with an agglutinating solution comprising beads coated in a substance configured to bond with the target biological substance, wherein the beads agglutinate in the presence of the target biological substance;
b) inputting the microscopic image to an image analysis algorithm configured to detect whether agglutination is present in the microscopic image,
c) outputting, by the image analysis algorithm, an indication of whether the target biological substance is present or not present.

2. The method according to claim 1, wherein the target biological substance is a viral antigen, or a viral antibody, preferably wherein the viral antigen is a SARS-CoV-2 antigen selected from: nucleocapsid (N), Spike (S), Membrane (M) and/or Envelope (E) proteins; or wherein the viral antibody is an antibody for SARS-CoV-2 antigen selected from: nucleocapsid (N), Spike (S), Membrane (M) and/or Envelope (E) proteins.

3. The method according to claim 1, wherein the target biomarker is a cancer biomarker indicative of the presence of cancer in the subject or wherein the target pathogen pertains to the *Leishmania* genus.

4. The method according to any of the preceding claims, wherein the sample is saliva, throat mucus or sputum.

5. The method according to any of the previous claims, wherein the image analysis algorithm is a machine learning algorithm trained to determine whether the microscopic image contains agglutinations.

6. The method according to any of the preceding claims, further comprising receiving a plurality of microscopic images of the test solution, wherein the method comprises selecting a subset of microscopic images of the plurality of images which each have an image sharpness above a predetermined value, wherein step c) comprises inputting the subset of microscopic images to the image analysis algorithm; optionally wherein the subset of microscopic images is selected by computing a numerical value indicative of image sharpness for each of the microscopic images and comparing each numerical value to the predetermined value.

7. The method according to claim 6, wherein the image analysis algorithm determines whether agglutinations are present in each image of the subset of images, and provides an indication that the target biological sample is present or not present based on a fusion of the analysis of one or more of the images of the subset of microscopic images, preferably wherein the fusion criteria is selected from the group comprising: maximum score criteria, average score criteria, majority voting criteria or single positive criteria.

8. The method according to any preceding claim, wherein the resolution of the microscopic image is equal or lower than 1 µm.

9. The method according to any preceding claim, wherein the indication is a quantitative value indicating the confidence of the pathogen, cell, target protein or antibody being present.

10. The method according to any preceding claim, wherein the agglutination solution comprises:
beads coated in antibodies specifically binding a target pathogen, antigen or
biomarker, or coated in antigen receptor-binding domains (RBDs) specifically binding a target antibody on its surface; and
a buffer;
wherein the solution is a colloidal solution of the beads suspended in the buffer; and wherein the solution indicates the presence of the pathogen, antigen, antibody or biomarker in the biological sample by the formation of antigen-antibody complexes that agglutinates the beads between themselves.

11. The method according to claim 10, wherein the beads are polystyrene latex beads and are preferably comprised between 0.8 and 1.2 µm.

12. The method according to any of the claims 10 or 11, wherein the buffer is a preservation buffer wherein the zeta potential of the beads in the buffer is higher than 20 mV.

13. The method according to any of the claims 10 to 12, wherein the beads comprise at least two different sets of beads comprising different antibodies specifically binding the same target pathogen, antigen or biomarker.

14. An *in-vitro* method for the diagnosis of a disease selected from an infectious disease or cancer, which comprises determining the presence of a target pathogen, antigen, antibody or biomarker in a biological sample obtained from a subject, by means of the method of any of the claims 1 to 13.

15. A computer program product comprising instructions which, when executed by a computer, causes the computer to perform the method according to any of claims 1 to 14.
